# EUROPÄISCHE PATENTANMELDUNG

(11) **EP 1 191 254 A2**
(43) Veröffentlichungstag der Anmeldung: **27.03.2002**
(21) Anmeldenummer: 01119815.7
(22) Anmeldetag: 16.08.2001
(51) Int. Cl.: F16H 1/22

(54) **Zweistufige Getriebeanordnung**

(30) Priorität: 25.09.2000 DE 10047308
(71) Anmelder: IMS MORAT SÖHNE GmbH, D-78166 Donaueschingen (DE); Pierburg Aktiengesellschaft, 41460 Neuss (DE)
(72) Erfinder: Hofschulte, Wolfram H., Dipl.-Ing. (FH), 79848 Bonndorf (DE); Synovzik, Wilfried, Dipl.-Ing. (FH), 78183 Hüfingen (DE); Dismon, Heinrich, Dipl.-Ing., 52538 Gangelt (DE); Köster, Andreas, Dipl.-Ing., 45149 Essen (DE)
(74) Vertreter: Patentanwälte Westphal, Mussgnug & Partner

(57) **Zusammenfassung**

Die zweistufige Getriebeanordnung weist eine Antriebswelle (20) auf, die über eine in einem feststehenden Gehäuse (10, 12) angeordneten und Planetenräder (30) enthaltende erste Getriebestufe eine zweite Getriebestufe antreibt, welche mit einer Abtriebswelle (22) kämmend in Eingriff steht. Jedes der Planetenräder (30) ist als gestuftes Doppelzahnrad ausgebildet mit einem ersten Zahnrad (32), das mit der Antriebswelle (20) in Eingriff steht, und mit einem in Richtung Abtriebsseite weisenden zweiten Zahnrad (34). Die Lagerachsen (16) jedes der Planetenräder (30) sind innerhalb des Gehäuses (10, 12) orstfest angeordnet. Des weiteren sind die zweiten Zahnräder (34) der Planetenräder (30) mit einem Hohlrad (40) der zweiten Getriebestufe kämmend in Eingriff, wobei das Hohlrad (40) drehfest mit der Abtriebswelle (22) gekoppelt ist.

## Beschreibung

Die Erfindung betrifft eine zweistufige Getriebeanordnung gemäß den Merkmalen des Oberbegriffs des Anspruchs 1.

Solche Getriebeanordnungen mit einer Antriebswelle, die über eine in einem feststehenden Gehäuse angeordnete und Planeträder enthaltende erste Getriebestufe eine zweite Getriebestufe antreiben, welche mit einer Abtriebswelle kämmend in Eingriff steht, sind hinlänglich bekannt. Ein Beispiel für eine solche zweistufige Getriebeanordnung zeigt z.B. die deutsche Patentschrift DE 43 24 876 C1. Dort besteht die Getriebeanordnung aus zwei hintereinandergeschalteten Planetengetriebestufen. Das gesamte Getriebe ist als Umlaufgetriebe ausgebildet, bei dem die einzelnen Planetenräder der Planetengetriebestufen eine um die Mittenachse des Getriebes erfolgende rotatorische Bewegung ausüben, wobei die einzelnen Planetenräder der Planetengetriebestufen selbst wiederum um ihre eigene Achse drehen.

Problematisch bei solchen bekannten Getrieben sind die durch die rotierenden Planetenräder hervorgerufenen rotatorischen Trägheiten, die zu Reibungsverlusten und Stabilitätsproblemen führen können und damit den Wirkungsgrad des Getriebes reduzieren. Darüber hinaus zeichnet sich die Anordnung von zwei hintereinander geschalteten Planetengetriebestufen durch einen verhältnismäßig platzraubenden Aufbau aus.

Der vorliegenden Erfindung liegt deshalb die Aufgabe zu Grunde, eine Getriebeanordnung anzugeben, durch welche die bewegten rotatorischen Trägheitsmassen reduziert sind und bei der gleichzeitig der gesamte Bauraum der Getriebeanordnung reduziert ist.

Diese Aufgabe wird durch eine Getriebeanordnung mit den Merkmalen des Anspruchs 1 gelöst.

Weiterbildungen dieser Getriebeanordnung sind Gegenstand der Unteransprüche.

Die Getriebeanordnung nach der vorliegenden Erfindung zeichnet sich also insbesondere dadurch aus, daß die Planetenräder der ersten Getriebestufe jeweils als gestufte Doppelzahnräder ausgebildet sind mit einem ersten Zahnrad, das mit der Antriebswelle in Eingriff steht, und mit einem in Richtung Abtriebsseite weisenden zweiten Zahnrad. Die Drehachsen jeder der Planetenräder sind innerhalb des Gehäuses des Getriebes ortsfest angeordnet. Die zweiten Zahnräder der Planetenräder stehen mit einem Hohlrad der zweiten Getriebestufe kämmend in Eingriff, wobei das Hohlrad drehfest an die Abtriebswelle gekoppelt ist.

Wesentlich und der entscheidende Unterschied zu den bisher bekannt gewordenen Getriebeanordnungen ist die Tatsache, daß die Planetenräder zwar um ihre eigene Drehachse rotieren, jedoch nicht um die Mittenachse des Getriebes, wie es bei hinlänglich bekannten Planetengetrieben der Fall ist. Die erste Getriebestufe der vorliegenden Erfindung mit seinen Planetenrädern, die jeweils als "stehende" gestufte Doppelzahnräder ausgestaltet sind, dient zur Untersetzung der Drehbewegung eines auf einer Antriebswelle sitzenden Ritzels, das beispielsweise mit einem Elektromotor gekoppelt ist. In Verbindung mit der zweiten Getriebestufe wird neben der Untersetzung der Drehbewegung gleichzeitig eine Momenterhöhung an der Abtriebswelle erreicht. Die gewählte Bauform des erfindungsgemäßen Getriebes erlaubt durch die ortsfesten Planetenräder eine Reduzierung der bewegten rotatorischen Trägheitsmassen.

Erfindungsgemäß ist die zweite Getriebestufe als Hohlrad ausgebildet, welches drehfest mit der Abtriebswelle gekoppelt ist, und das von dem ortsfesten Planetenrädern der ersten Getriebestufe angetrieben wird. Das Hohlrad ist vorzugsweise an zwei Stellen gelagert, nämlich vorzugsweise am freien Wellenende der Abtriebswelle und innerhalb des Getriebegehäuses an einem zweiten Lager, welches auf einem innerhalb des Gehäuses feststehend angeordneten Getriebekäfig sitzt.

Der sehr bauraumsparende Aufbau der erfindungsgemäßen Getriebeanordnung erlaubt neben dem Drehmomentabgriff am Abtriebsende auch die Querkrafteinleitung am Abtriebswellenende, so dass sich die erfindungsgemäße Getriebeanordnung insbesondere auch als Aktuator für Motorkomponenten in einem Kraftfahrzeug und insbesondere in einem Abgasrückführungssystem eines Kraftfahrzeuges eignet.

In einer bevorzugten Weiterbildung der Erfindung ist vorgesehen, daß durch die Antriebswelle mehrere, zB. drei, als gestufte Doppelzahnräder ausgebildete Planetenräder gleichzeitig antreibbar sind. Die erste Getriebestufe weist hierfür eine Stirnradverzahnung mit drei ortsfesten Planetenrädern auf. Die Einleitung der Drehbewegung erfolgt durch solche mehrere Planetenräder symmetrisch. Durch die ortsfeste Anordnung der Planetenräder, die sich nur im ihre eigene Achse drehen können, werden die umlaufenden Massen im Vergleich zu herkömmlichen Planetengetrieben reduziert. Die Reduzierung der rotatorischen Massenträgheiten führt zu einem verbesserten Wirkungsgrad des gesamten Getriebes und zu verminderten Reibungsverlusten.

Wie bereits erwähnt, ist innerhalb des Getriebegehäuses vorzugsweise ein Käfig feststehend angeordnet. Dieser Käfig weist Öffnungen zur Aufnahme der ortsfesten Lagerachsen der verwendeten Planetenräder auf. Die ortsfesten Lagerachsen der Planetenräder sind hierfür mit ihren einen Enden in vorgesehenen Öffnungen des Käfigs gelagert und sitzen mit ihren anderen Enden in Öffnungen des Gehäuses des Getriebes.

Zweckmäßigerweise ist das Gehäuse des Getriebes aus zwei Gehäuseschalen gebildet, wobei eine der Gehäuseschalen als Motorflansch eines mit dem Getriebe koppelbaren Motors, vorzugsweise Elektromotors, ist.

In einer anderen Weiterbildung der Erfindung weist das Getriebegehäuse eine zweite Getriebeschale auf, die topfförmig gestaltet ist und auf der die erste Gehäuseschale, z.B. der erwähnte Motorflansch, feststehend aufsitzt. Die zweite Gehäuseschale weist eine mittige Bohrung auf, in der eine der Lagerbuchsen für die Abtriebswelle angeordnet ist. Die andere Lagerbuchse für die Abtriebswelle befindet sich zentrisch zur Getriebeachse und wird von dem Getriebekäfig gehalten.

Die erfindungsgemäße Getriebeanordnung wird nachfolgend anhand eines Ausführungsbeispieles im Zusammenhang mit zwei Figuren näher erläutert. Es zeigen:
Figur 1 ein Ausführungsbeispiel einer zweistufigen Getriebeanordnung nach der Erfindung in Schnittdarstellung, und
Figur 2 die Getriebeanordnung von Figur 1 in perspektivischer Ansicht bei teilweise aufgebrochenem Gehäuse.

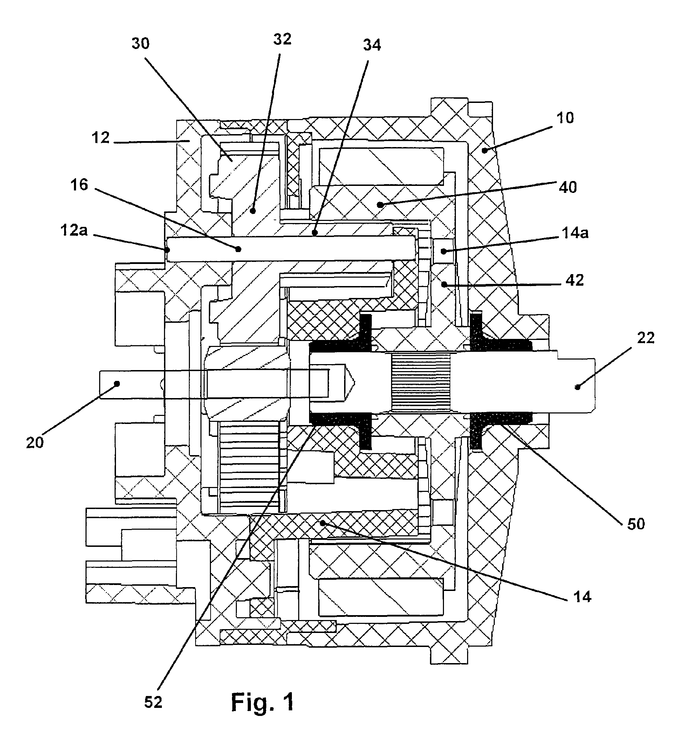

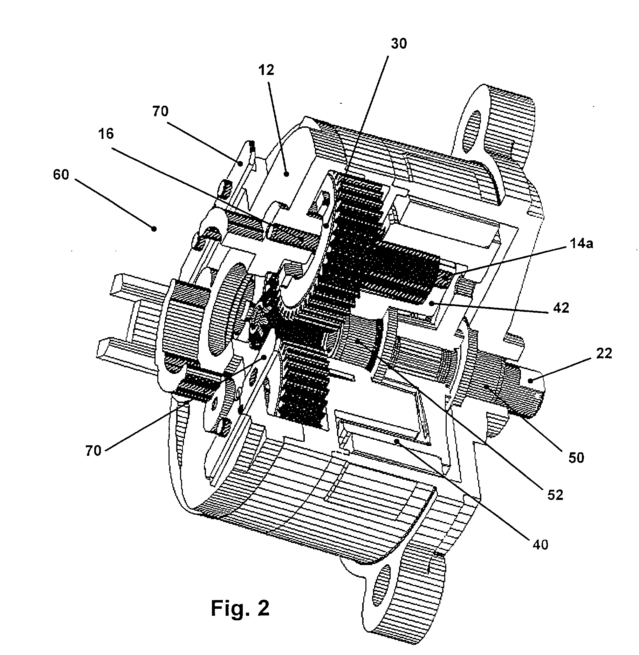

Das in den Figuren 1 und 2 dargestellte zweistufige Getriebe weist ein Gehäuse auf, das aus zwei Gehäuseteilen 10 und 12 gebildet ist. Das topfförmige erste Gehäuseteil 10 sitzt an dem plattenförmig gestalteten zweiten Gehäuseteil 12, das beispielsweise als Motorflansch für einen mit dem Getriebe gekoppelten Elektromotor 60 ausgebildet ist, auf. In dem Gehäuseteil 12 ist zentrisch zur Mittenachse 80 des Getriebes eine Öffnung vorgesehen, durch die eine Antriebswelle 20 ragt. Im Inneren des Gehäuses des Getriebes sitzt auf dieser Antriebswelle 20 ein der besseren Übersichtlichkeit wegen in den Figuren nicht dargestelltes Antriebsritzel.

Des weiteren verfügt das Getriebe über eine Abtriebswelle 22, die mit ihrem in Figur 1 dargestellten rechten Ende in das Innere des Gehäuses des Getriebes sitzt und mit ihrem anderen, gegenüberliegenden Ende aus dem Getriebegehäuse ragt. Die Abtriebswelle ist mit zwei Lagerbuchsen 50, 52 im Getriebe gehalten. Die erste Lagerbuchse 50 sitzt in einer zentrischen Öffnung der bodenförmigen Wandung 10a des topfförmigen ersten Gehäuseteils 10. Die zweite Lagerbuchse 52 wird von einem innerhalb des Getriebegehäuses feststehend angeordneten Getriebekäfig 14 gehalten.

Eine Drehbewegung der Antriebswelle 20 wird über die im Folgenden zu beschreibende Getriebeauslegung auf die Abtriebswelle 22 untersetzt bei gleichzeitiger Momenterhöhung.

Das auf der Antriebswelle 20 sitzende, nicht dargestellte Antriebsritzel steht mit drei Zahnrädern 32 einer ersten Getriebestufe kämmend in Eingriff. Diese Zahnräder 32 sind im Winkel um 120° versetzt gleich beabstandet zur Mittenachse 80 des Getriebes ortsfest angeordnet. Diese drei Zahnräder 32 haben einen deutlich größeren Außendurchmesser als das Antriebsritzel der Antriebswelle 20 und sitzen drehbar gelagert, jedoch ortsfest auf Lagerachsen 16. Die Lagerachsen 16 stützen sich mit ihren in Figur 1 rechts dargestellten Enden in Öffnungen 12a des rechten Gehäuseteils 12 und mit ihren linken Enden in den Öffnungen 14a des Getriebekäfigs 14 ab.

Jedes der Zahnräder 32 ist Bestandteil eines Planetenrades 30, das als gestuftes Doppelzahnrad ausgebildet ist. Jedes der Planetenräder 30 weist hierfür ein einstückig an das erste Zahnrad 32 angeformtes zweites Zahnrad 34 auf, welches einen deutlich kleineren Außendurchmesser als das erste Zahnrad 32 hat. Diese zweiten Zahnräder 34 sind auf der der Abtriebswelle 22 zugewandten Seite der ersten Zahnräder 32 der Planetenräder 30 konzentrisch angeformt. Die zweiten Zahnräder 34 sind mit einer Stirnradverzahnung versehen, welche mit der Innenverzahnung eines Hohlrades 40 kämmt. Hierfür ist das Hohlrad 40 topfförmig gestaltet mit einer ringförmigen Wandung 42, an deren Innenfläche die Innenverzahnung angeformt ist. Diese ringförmige Wandung 42 des Hohlrades 40 ist an ihrer in Figur 1 links dargestellten Stirnseite mit einer kreisscheibenförmigen Platte 44 einstückig in Verbindung. Zentrisch weist diese scheibenförmige Platte 44 des Hohlrades 40 eine Öffnung auf, in welcher die Abtriebswelle 22 feststehend sitzt.

Mit einem solchen Getriebe wird also eine zweistufige Getriebeanordnung geschaffen, bei der die erste Getriebestufe als Stirnradverzahnung mit drei ortsfesten Planetenrädern realisiert ist. Die Einleitung der Drehbewegung vom Antriebsritzel der Antriebswelle 20 erfolgt dank der Verbindung dreier Planetenräder symmetrisch. Die zweite Getriebestufe wird durch den Eingriff der drei Planetenräder mit einem Hohlrad realisiert. Die Getiebeanordnung zeichnet sich durch eine Minimierung der umlaufenden Teile aus, wobei durch die ortsfeste Anordnung der Planetenräder die rotatorischen Massenträgheiten des Getriebes minimiert sind.

Das Getriebegehäuse kann in einfacher Art und Weise mit einem Elektromotor 60 gekoppelt werden. Hierfür wird das Gehäuseteil 12 als Motorflansch für den Elektromotor 60 realisiert. Damit nimmt das Außengehäuse des Getriebes die Getriebeantriebsseite des Elektromotors 60 auf, der durch eine integrierte Verdrehsicherung die auftretenden Reaktions-Momente abstützt. Die konstruktive Gestaltung läßt vorteilhafterweise die Vormontage einer Getriebe-Motor-Einheit als für sich gesondert prüfbare Einheit zu, so dass ingesamt ein montagegerechtes Motor-Getriebemodul bereitgestellt ist. Das Gehäuseteils 12 des Gehäuses und damit vorzugsweise der Motorflansch des Elektromotors 60 kann zusätzlich Kontaktfahnen 70 aufnehmen, welche die Kontaktierung der montierten Getriebe-Motor-Einheit mit einem Stecker oder Elektronikteil erlauben. Der Elektromotor 60 wird beispielseweise durch Verschweißung mit dem Getriebe verbunden.

Die kompakte, platzsparende Getriebeanordnung, wie in den Figuren 1 und 2 dargestellt, eignet sich insbesondere zur Verwendung im Bereich Aktuatorik für Motorkomponenten mit getriebetechnischen und anwendungsspezifischen Vorteilen. Die Vorteile bestehen in den geringen rotatorischen Trägheiten, in einer sicheren Möglichkeit zur Festigkeitsauslegung bei gleichzeitiger platzsparender Dimensionierung dank der Drehmomentverteilung auf drei Eingriffsräder, in der Realisierung dauerhaltbarer, wirkungsgradstabiler und reibungsarmer Lagerstellen dank der Verwendung ortsfester Planetenräder sowie in einer exaktenWellenlagerung, die die Einleitung von Querkräften am Wellenabtrieb erlaubt, dank der abtriebsseitigen und getriebeinternen, zweiseitigen Lagerung der Abtriebswelle. Das erfindungsgemäße Getriebe ist insbesondere in einer Abgasrückführungseinheit eines Kraftfahrzeuges einsetzbar.

### Bezugszeichenliste

- 10: Gehäuseteil
- 10a: Bodenplatte
- 12: Gehäuseteil
- 12a: Öffnung
- 14: Getriebekäfig
- 14a: Öffnung
- 16: Lagerachse
- 20: Antriebswelle
- 22: Abtriebswelle
- 30: Planetenrad
- 32: erstes Zahnrad
- 34: zweites Zahnrad
- 40: Hohlrad
- 42: ringförmige Wandung
- 44: scheibenförmige Platte
- 50: erste Lagerbuchse
- 52: zweite Lagerbuchse
- 60: Elektromotor
- 70: Kontaktfahne
- 80: Getriebeachse

## Patentansprüche

1. Zweistufige Getriebeanordnung mit einer Antriebswelle (20), die über eine in einem feststehenden Gehäuse (10, 12) angeordneten und Planetenräder (30) enthaltende erste Getriebestufe eine zweite Getriebestufe antreibt, welche mit einer Abtirebswelle (22) kämmend in Eingriff steht, **dadurch gekennzeichnet, daß** jedes der Planetenräder (30) als gestuftes Doppelzahnrad ausgebildet ist mit einem ersten Zahnrad (32), das mit der Antriebswelle (20) in Eingriff steht, und mit einem in Richtung Abtriebsseite weisenden zweiten Zahnrad (34), daß die Lagerachsen (16) jedes der Planetenräder (30) innerhalb des Gehäuses (10, 12) orstfest angeordnet sind, und daß die zweiten Zahnräder (34) der Planetenräder (30) mit einem Hohlrad (40) der zweiten Getriebestufe kämmend in Eingriff stehen, wobei das Hohlrad (40) drehfest mit der Abtriebswelle (22) gekoppelt ist.

2. Getriebeanordnung nach Anspruch 1, **dadurch gekennzeichnet, daß** durch die Antriebswelle (20) drei als gestufte Doppelzahnräder ausgebildete Planetenräder (30) gleichzeitig antreibbar sind.

3. Getriebeanordnung nach Anspruch 1 oder 2, **dadurch gekennzeichnet, daß** die drei Planetenräder (30) symmetrisch um die Antriebswelle (20) angeordnet sind.

4. Getriebeanordnung nach einem der Ansprüche 1 bis 3,
**dadurch gekennzeichnet, daß** innerhalb des Gehäuses (10, 12) ein Käfig (14) feststehend angeordnet ist, und daß im Käfig (14) Öffnungen (14a) zur Aufnahme der orstfesten Lagerachsen (16) der Planetenräder (40) aufweist.

5. Getriebeanordnung nach einem der Ansprüche 1 bis 4,
**dadurch gekennzeichnet, daß** in den Öffnungen des Käfigs (14) die einen Enden der ortsfesten Lagerachsen (34) sitzen und daß die anderen Enden der orstfesten Lagerachsen (34) in Öffnungen (12a) der ersten Gehäuseschale (12) des Getriebes angeordnet sind.

6. Getriebeanordnung nach Anspruch 5,
**dadurch gekennzeichnet, daß** die zweite Gehäuseschale (12) ein Motorflansch eines mit dem Getriebe gekoppelten Motors (60) ist.

7. Getriebeanordnung nach einem der Ansprüche 1 bis 6,
**dadurch gekennzeichnet, daß** das Gehäuse (10, 12) eine zweite Gehäuseschale (10) aufweist, welche topfförmig gestaltet ist und auf der ersten Gehäuseschale (12) feststehend sitzt, und daß die zweite Gehäuseschale (10) eine mittige Bohrung (10a) aufweist, in der eine erste Lagerbuchse (50) angeordnet ist.

8. Getriebeanordnung nach einem der Ansprüche 1 bis 7,
**dadurch gekennzeichnet, daß** der Käfig (14) zentrisch zur Getriebeachse (70) eine zweite Lagerbuchse (52) haltert.

9. Getriebeanordnung nach Anspruch 7 und 8,
**dadurch gekennzeichnet, daß** die beiden Lagerbuchsen (50, 52) die Abtriebswelle (22) insbessondere axial und radial abstützen.

10. Getriebeanordnung nach einem der Ansprüche 1 bis 9,
**dadurch gekennzeichnet, daß** das Hohlrad (40) topfförmig ausgebildet ist und an seiner inneren Umfangsfläche eine Verzahnung aufweist, welche mit den zweiten Zähnrädern der Planetenräder (30) kämmt und drehfest auf der Abtriebswelle (22) sitzt.

11. Getriebeanordnung nach einem der Ansprüche 1 bis 10,
**dadurch gekennzeichnet, daß** der Motor (60) mit dem Gehäuse (10, 12) des Getriebes drehfestverbunden ist,.

12. Verwendung der Getriebeanordnung nach einem der
Ansprüche 1 bis 11 als Aktuator für Motorkomponenten ei nes Kraftfahrzeuges, und insbesondere in einem Abgasrückführungssystem.
